(19) Europäisches Patentamt / European Patent Office / Office européen des brevets

(11) **EP 1 561 912 B1**

## (12) EUROPEAN PATENT SPECIFICATION

(45) Date of publication and mention
of the grant of the patent:
**17.07.2013 Bulletin 2013/29**

(51) Int Cl.:
*F01L 13/00* *(2006.01)*

(21) Application number: **05002288.8**

(22) Date of filing: **03.02.2005**

(54) **Control apparatus for variable valve apparatus**

Steuergerät für einen variablen Ventiltrieb

Dispositif de contrôle pour une distribution variable

(84) Designated Contracting States:
**DE FR**

(30) Priority: **06.02.2004 JP 2004031032**

(43) Date of publication of application:
**10.08.2005 Bulletin 2005/32**

(73) Proprietor: **Hitachi, Ltd.**
**Tokyo (JP)**

(72) Inventor: **Machida, Kenichi**
**Isesaki-shi**
**Gunma-ken, 372-0023 (JP)**

(74) Representative: **Grünecker, Kinkeldey,**
**Stockmair & Schwanhäusser**
**Leopoldstrasse 4**
**80802 München (DE)**

(56) References cited:
EP-A2- 1 279 816   EP-A2- 1 363 007
DE-A1- 19 545 645   DE-A1- 19 756 342
US-A- 4 909 194   US-A- 6 073 610
US-A1- 2002 059 908

**Description**

BACKGROUND OF THE INVENTION

1. Field of the Invention

The present invention relates to a control apparatus for a variable valve apparatus which varies an operating characteristic of an engine valve in an internal combustion engine, such as known from EP 1279 816 A.

2. Description of the Related Art

Japanese Unexamined Patent Publication No. 2001-254637 discloses an apparatus for diagnosing the malfunction of a variable valve lift apparatus which varies a lift amount of an engine valve.

In the above diagnosis apparatus, it is judged that the variable valve lift apparatus is malfunctioned, when a change in lift amount of the engine valve is equal to or smaller than a predetermined value and also when an absolute value of the deviation between the lift amount of the engine valve and a target value thereof exceeds a predetermined value.

If a control unit that controls the variable valve lift apparatus is operated norrnally, it is possible to execute the fail-safe processing when the variable valve lift apparatus is malfunctioned.

However, in the above diagnosis apparatus, there has been a problem in that the fail-safe processing cannot be executed if the control unit is failed.

The document US 2002/059908 A1 discloses a control apparatus for an electromechanically driven valve in an internal combustion engine. A controller controls the operation of the electromechanically driven valve. A communication computer is connected via a unidirectional communication line to the controller. If the communication computer detects a defect in the valve drive of the controller it signals the condition to an operational control unit connected to the communication computer via a CAN-BUS.

**SUMMARY OF THE INVENTION**

It is therefore an object of the present invention to provide a control apparatus capable of executing the fail-sate processing, even if a control unit that controls a variable valve mechanism is failed.

This object is solved by the features of claim 1.

The other objects and features of the invention will become understood from the following description with reference to the accompanying drawings.

BRIEF DESCRIPTION OF THE DRAWINGS

Fig. 1 is a systematic diagram of an engine in an embodiment of a present invention.

Fig. 2 is a cross section view showing a variable valve event and lift mechanism in the embodiment (A-A cross section view in Fig. 3).

Fig. 3 is a side elevation view of the variable valve event and lift mechanism.

Fig. 4 is a top plan view of the variable valve event and lift mechanism.

Fig. 5 is a perspective view showing an eccentric cam for use in the variable valve event and lift mechanism.

Fig. 6. is a cross section view showing a low lift control condition of the variable valve event and lift mechanism (B-B cross section view of Fig. 3).

Fig. 7 is a cross section view showing a high lift control condition of the variable valve event and lift mechanism (B-B cross section view of Fig. 3).

Fig. 8 is a graph showing a lift characteristic of an intake valve in the variable valve characteristic mechanism.

Fig. 9 is a graph showing a correlation between valve timing and a lift amount in the variable valve event and lift mechanism.

Fig. 10 is a perspective view showing a driving mechanism of a control shaft in the variable valve event and lift mechanism.

Fig. 11 is a circuit block diagram of a VEL controller.

Fig. 12 is a flowchart showing the computation processing of a target value by an engine control module (ECM)

Fig. 13 is a flowchart showing the transmission and reception processing of data by the VEL controller.

Fig. 14 is a flowchart showing a control of the variable valve event and lift mechanism by the VEL controller.

Fig. 15 is a flowchart showing the failure diagnosis and the fail-safe processing of the VEL controller by the ECM.

PREFERRED EMBODIMENTS

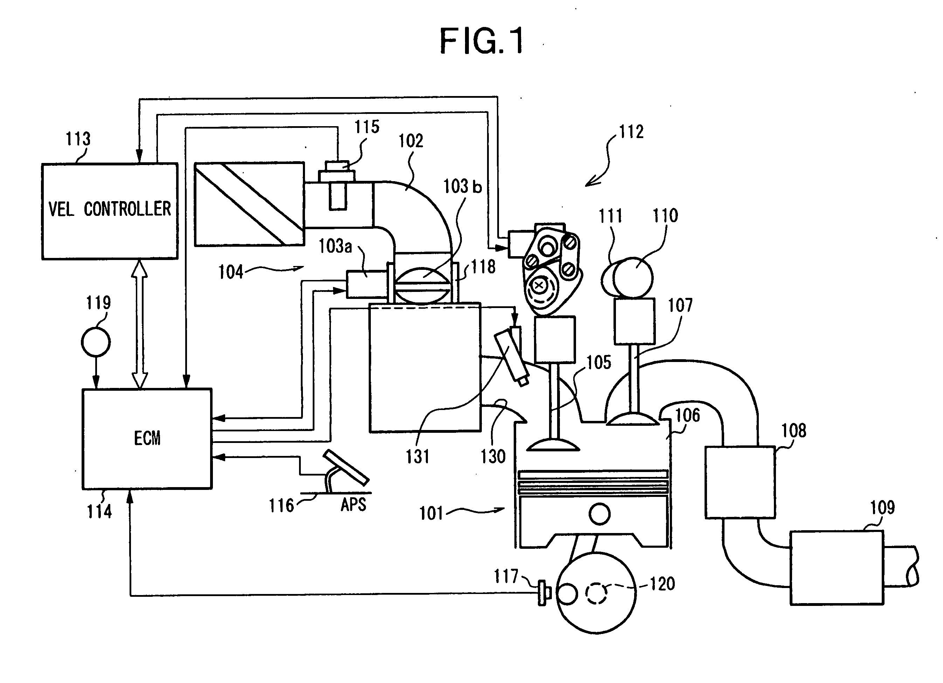

Fig. 1 is a systematic diagram of a vehicle engine in an embodiment.

In FIG. 1, in an intake pipe 102 of an internal combustion engine 101, an electronically controlled throttle 104 is disposed.

Electronically controlled throttle 104 is a device for driving a throttle valve 103b to open and close by a throttle motor 103a.

Then, air is sucked into a combustion chamber 106 of engine 101 via electronically controlled throttle 104 and an intake valve 105.

A combusted exhaust gas is discharged from combustion chamber 106 via an exhaust valve 107, and thereafter, is purified by a front catalyst 108 and a rear catalyst 109, to be emitted into the atmosphere.

Exhaust valve 107 is driven by a cam 111 axially supported by an exhaust side camshaft 110, to open and close, while maintaining a fixed lift amount, a fixed valve operating angle and fixed valve timing.

On the other hand, there is disposed a variable valve event and lift (VEL) mechanism 112 which continuously varies a lift amount of intake valve 105 as well as an operating angle thereof.

Here, an engine control module (ECM) 114 and a VEL controller 113 are disposed.

ECM 114 (a second control unit) computes a target lift amount, and VEL controller 113 (a first control unit) controls VEL mechanism 112 so as to obtain the target lift amount.

ECM 114 receives detection signals from various sensors.

As the various sensors, there are disposed an air flow meter 115 detecting an intake air flow amount of engine 101, an accelerator opening sensor 116 detecting an accelerator opening degree, a crank angle sensor 117 taking a crank rotation signal out of crankshaft 120, a throttle sensor 118 detecting an opening degree TVO of throttle valve 103b and a water temperature sensor 119 detecting a cooling water temperature of engine 101.

Further, a fuel injection valve 131 is disposed on an intake port 130 at the upstream side of intake valve 105.

Fuel injection valve 131 is driven to open based on an injection pulse signal from ECM 114 to inject fuel of an amount proportional to the injection pulse width of the injection pulse signal.

Further, ECM 114 computes ignition timing (ignition advance value) based on the fuel injection pulse width and an engine rotation speed, to control the ignition timing by an ignition plug (not shown in the figure).

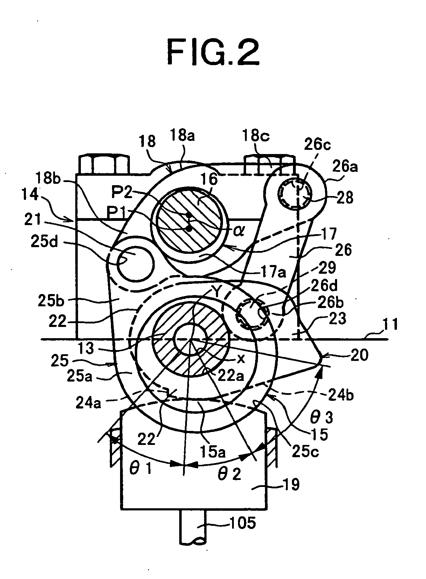

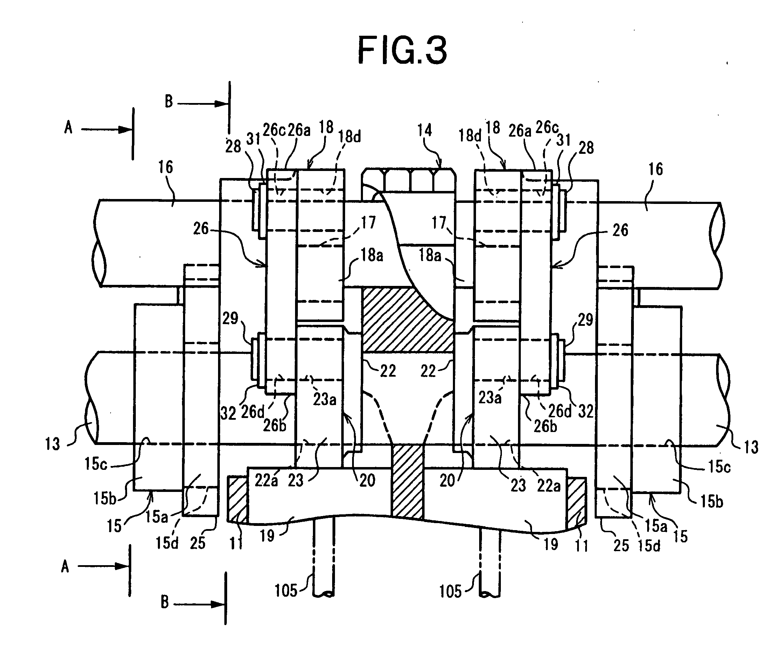

Fig. 2 to Fig. 4 show in detail the structure of VEL mechanism 112.

VEL mechanism 112 shown in Fig. 2 to Fig. 4 includes a pair of intake valves 105, 105, a hollow camshaft 13 rotatably supported by a cam bearing 14 of a cylinder head 11, two eccentric cams 15, 15 (drive cams) being rotation cams which are axially supported by camshaft 13, a control shaft 16 rotatably supported by cam bearing 14 and arranged in parallel at an upper position of camshaft 13, a pair of rocker arms 18, 18 swingingly supported by control shaft 16 through a control cam 17, and a pair of independent swing cams 20, 20 disposed to upper end portions of intake valves 105, 105 through valve lifters 19, 19, respectively.

Eccentric cams 15, 15 are connected with rocker arms 18, 18 by link arms 25, 25, respectively. Rocker arms 18, 18 are connected with swing cams 20, 20 by link members 26, 26.

Rocker arms 18, 18, link arms 25, 25, and link members 26, 26 constitute a transmission mechanism.

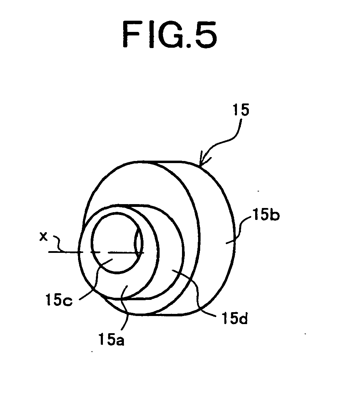

Each eccentric cam 15, as shown in Fig. 5, is formed in a substantially ring shape and includes a cam body 15a of small diameter, a flange portion 15b integrally formed on an outer surface of cam body 15a. A camshaft insertion hole 15c is formed through the interior of eccentric cam 15 in an axial direction, and also a center axis X of cam body 15a is biased from a center axis Y of camshaft 13 by a predetermined amount.

Eccentric cams 15, 15 are pressed and fixed to camshaft 13 via camshaft insertion holes 15c at outsides of valve lifters 19, 19, respectively, so as not to interfere with valve lifters 19, 19.

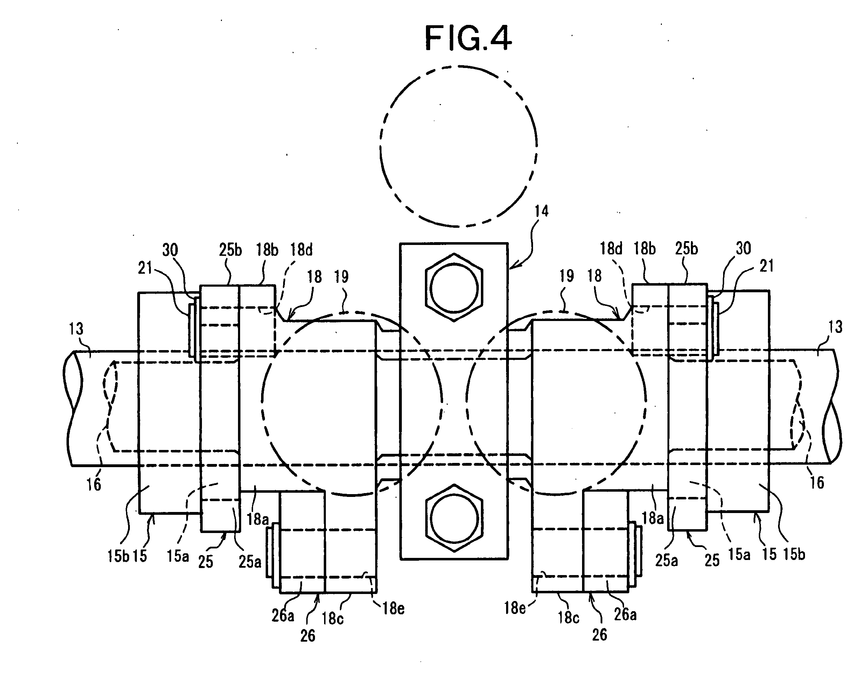

Each rocker arm 18, as shown in Fig. 4, is bent and formed in a substantially crank shape, and a central base portion 18a thereof is rotatably supported by control cam 17.

A pin hole 18d is formed through one end portion 18b which is formed to protrude from an outer end portion of base portion 18a. A pin 21 to be connected with a tip portion of link arm 25 is pressed into pin hole 18d. A pin hole 18e is formed through the other end portion 18c which is formed to protrude from an inner end portion of base portion 18a. A pin 28 to be connected with one end portion 26a (to be described later) of each link member 26 is pressed into pin hole 18e.

Control cam 17 is formed in a cylindrical shape and fixed to an outer periphery of control shaft 16. As shown in Fig. 2, a center axis P1 position of control cam 17 is biased from a center axis P2 position of control shaft 16 by a.

Swing cam 20 is formed in a substantially lateral U-shape as shown in Fig. 2, Fig. 6 and Fig. 7, and a supporting hole 22a is formed through a substantially ring-shaped base end portion 22. Camshaft 13 is inserted into supporting hole 22a to be rotatably supported. Also, a pin hole 23a is formed through an end portion 23 positioned at the other end portion 18c of rocker arm 18.

A base circular surface 24a of base end portion 22 side and a cam surface 24b extending in an arc shape from base circular surface 24a to an edge of end portion 23, are formed on a bottom surface of swing cam 20. Base circular surface 24a and cam surface 24b are in contact with a predetermined position of an upper surface of each valve lifter 19 corresponding to a swing position of swing cam 20.

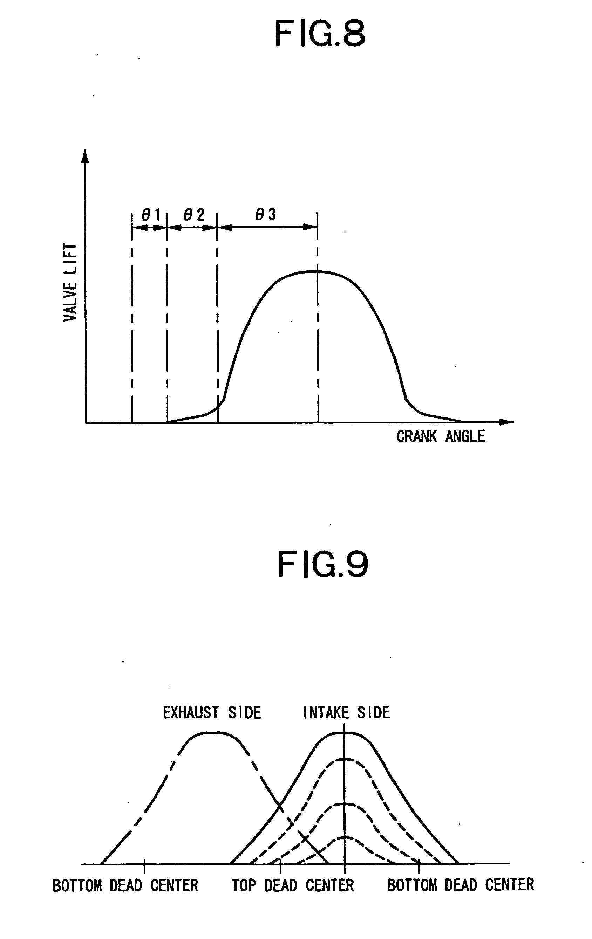

Namely, according to a valve lift characteristic shown in Fig. 8, as shown in Fig. 2, a predetermined angle range θ1 of base circular surface 24a is a base circle interval and a range of from base circle interval θ1 of cam surface 24b to a predetermined angle range θ2 is a so-called ramp interval, and a range of from ramp interval θ2 of cam surface 24b to a predetermined angle range θ3 is a lift interval.

Link arm 25 includes a ring-shaped base portion 25a and a protrusion end 25b protrudingly formed on a predetermined position of an outer surface of base portion 25a. A fitting hole 25c to be rotatably fitted with the outer surface of cam body 15a of eccentric cam 15 is formed on a central position of base portion 25a. Also, a pin hole 25d into which pin 21 is rotatably inserted is formed through protrusion end 25b.

Link member 26 is formed in a linear shape of predetermined length and pin insertion holes 26c, 26d are formed through both circular end portions 26a, 26b.

End portions of pins 28, 29 pressed into pin hole 18d of the other end portion 18c of rocker arm 18 and pin hole 23a of end portion 23 of swing cam 20, respectively, are rotatably inserted into pin insertion holes 26c, 26d.

Snap rings 30, 31, 32 restricting axial transfer of link arm 25 and link member 26 are disposed on respective end portions of pins 21, 28, 29.

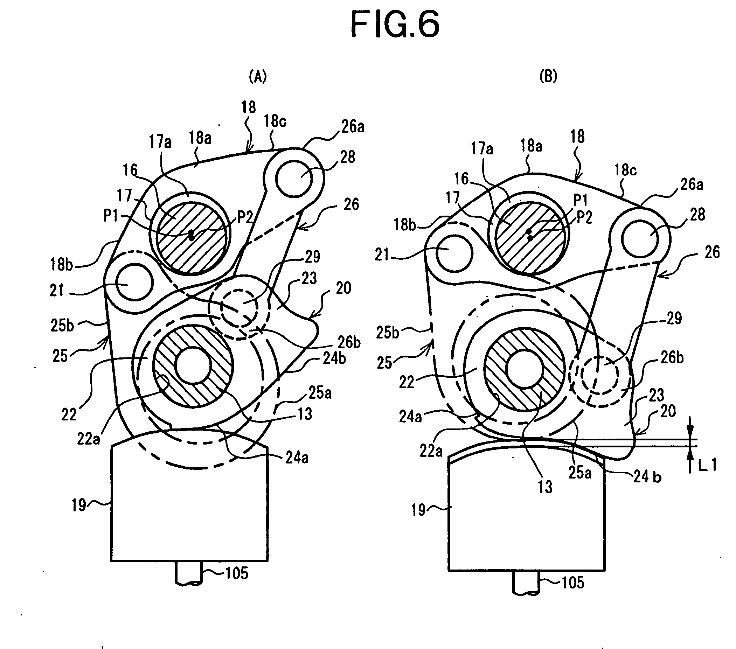

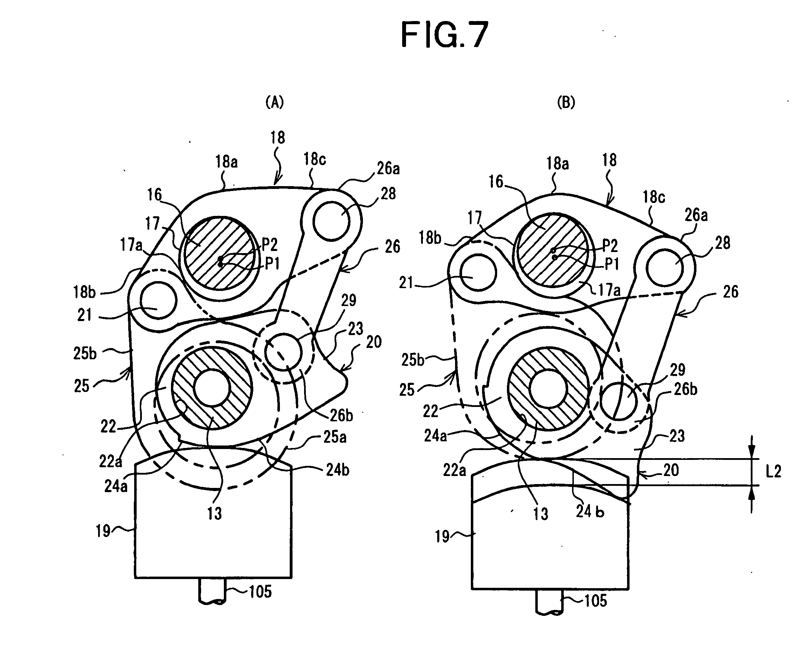

In such a constitution, depending on a positional relation between the center axis P2 of control shaft 16 and the center axis P1 of control cam 17, as shown in Fig. 6 and Fig. 7, the valve lift amount is varied, and by driving control shaft 16 to rotate, the position of the center axis P2 of control shaft 16 relative to the center axis P1 of control cam 17 is changed.

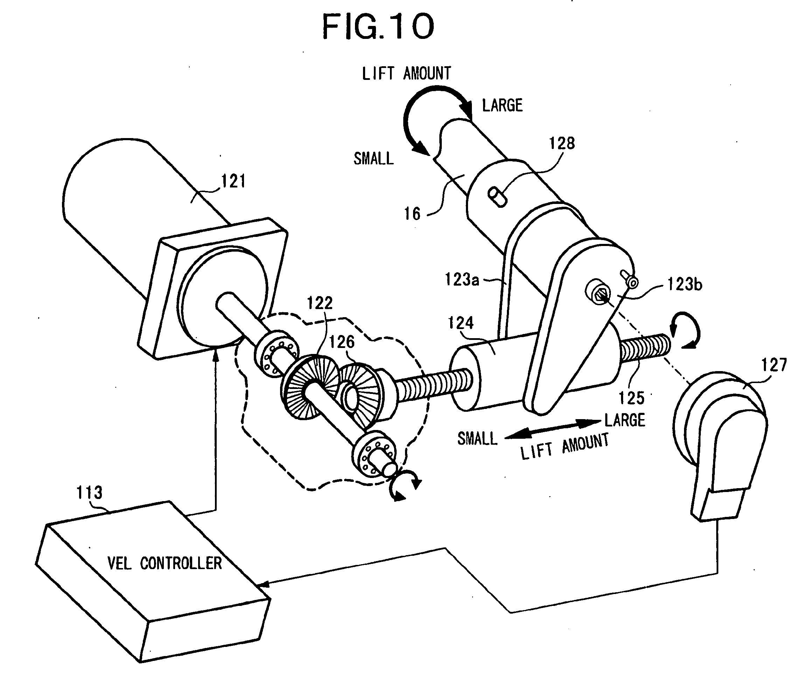

Control shaft 16 is driven to rotate within a predetermined rotation angle range, which is restricted by a stopper, by a DC servo motor (actuator) 121 as shown in Fig. 10. By varying a rotation angle of control shaft 16 by actuator 121, the lift amount and operating angle of each of intake valves 105, 105 are continuously varied within a variable range between a maximum valve lift amount and a minimum valve lift amount, which is restricted by the stopper (refer to Fig. 9).

In Fig. 10. DC servo motor 121 is arranged so that a rotation shaft thereof is parallel to control shaft 16, and a bevel gear 122 is axially supported by a tip portion of the rotation shaft.

On the other hand, a pair of stays 123a, 123b is fixed to the tip end of control shaft 16. A nut 124 is swingingly supported around an axis parallel to control shaft 16 connecting tip portions of the pair of stays 123a, 123b.

A bevel gear 126 meshed with bevel gear 122 is axially supported at a tip end of a threaded rod 125 engaged with nut 124. Threaded rod 125 is rotated by the rotation of DC servo motor 121, and the position of nut 124 engaged with threaded rod 125 is displaced in an axial direction of threaded rod 125, so that control shaft 16 is rotated.

Here, the valve lift amount is decreased as the position of nut 124 approaches bevel gear 126, while the valve lift amount is increased as the position of nut 124 gets away from bevel gear 126.

Further, a potentiometer type angle sensor 127 detecting the angle of control shaft 16 is disposed on the tip end of control shaft 16, as shown in Fig. 10. VEL controller 113 feedback controls DC servo motor 121 so that an angle detected by angle sensor 127 coincides with a target angle (a value equivalent to the target lift amount).

A stopper member 128 is formed to protrude from the outer periphery of control shaft 16.

When stopper member 128 is in contact with a receiving member on the fixing side (not shown in the figure) in both of a valve lift amount increasing direction and a valve lift amount decreasing direction, the rotation range (variable range of the valve lift amount) of control shaft 16 is restricted.

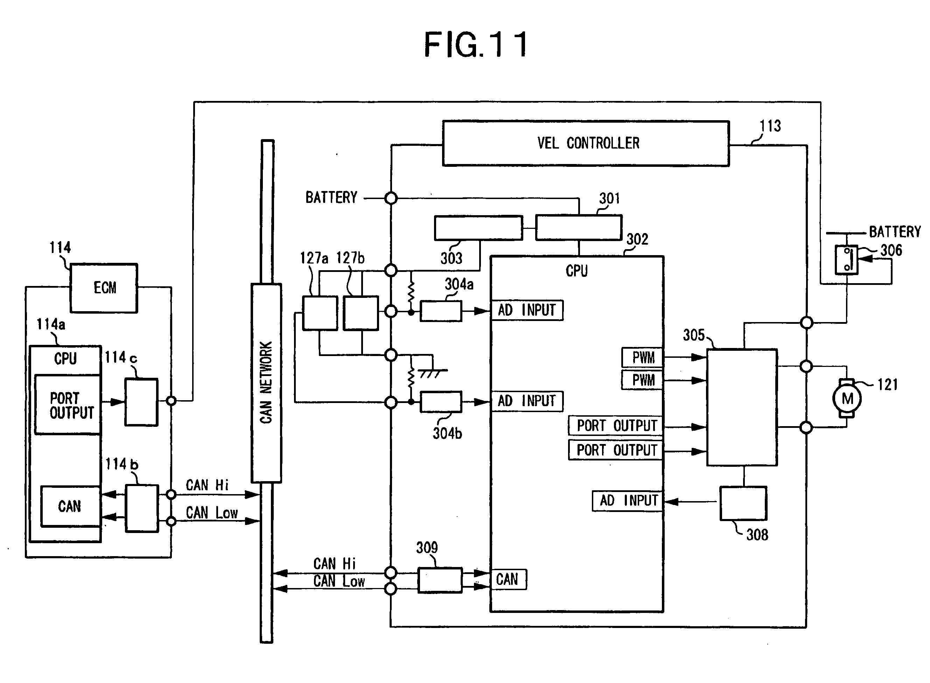

Fig. 11 shows a configuration of VEL controller 113.

A battery voltage is supplied to VEL controller 113, and the power is supplied to a CPU 302 via a power supply circuit 301.

Further, a power supply voltage from power supply circuit 301 is supplied to angle sensors 127a, 127b via a power supply buffer circuit 303.

Output signals from angle sensors 127a, 127b are read in CPU 302 via input circuits 304a, 304b.

Further, there is disposed a motor drive circuit 305 for driving DC servo motor 121.

Motor drive circuit 305 is a PWM system drive circuit which varies the pulse width of a pulse signal for turning ON/OFF a driving power source for DC servo motor 121 based on a direct current level of a control signal (pulse width modulated signal PWM) output from CPU 302, which varies the ON duty of the pulse signal to control an average voltage of DC servo motor 121.

In order to drive DC servo motor 121 in a normal rotation direction and in a reverse rotation direction, control signals for normal and reverse rotations are input to motor drive circuit 305 from CPU 302, other than the pulse width modulated signal PWM.

A battery voltage is supplied to motor drive circuit 305 via a relay circuit 306.

Relay circuit 306 is driven to turn ON/OFF by a relay drive circuit 114c.

Relay drive circuit 114c is controlled based on a port output from a CPU 114a.

Further, there is disposed a current detection circuit 308 which detects a current of DC servo motor 121.

Moreover, VEL controller 113 is provided with a communication circuit 309 for communicating between VEL controller 113 and ECM 114. ECM 114 is provided with a communication circuit 114b for communicating with VEL controller. Thus, the intercommunication can be performed between VEL controller 113 and ECM 114.

Then, the target angle of control shaft 16 computed in ECM 114 is transmitted to VEL controller 113, while an angle REVEL of control shaft 16 detected by angle sensor 127 is transmitted to ECM 114 from VEL controller 113.

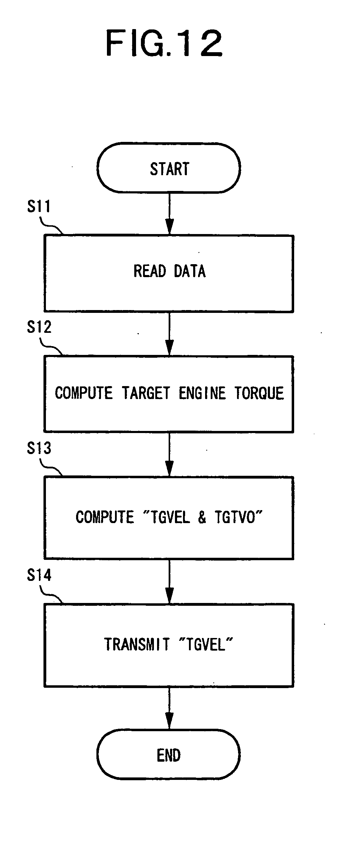

A flowchart in Fig. 12 shows the computation processing of the target value by ECM 114.

In step S11, data indicating engine operating conditions, such as, the accelerator opening, the engine rotation speed and the like, is read.

In step S12, a target engine torque is computed based on the data read in step S11.

In step S13, a target angle TGVEL of control shaft 16 and a target throttle opening TGTVO are computed based on the target engine torque.

In step S14, data of the target angle TGVEL is transmitted to VEL controller 113.

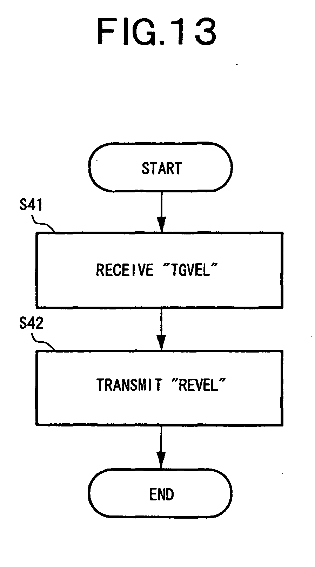

A flowchart in Fig. 13 shows the transmission and reception processing of data by VEL controller 113.

In step S41, the transmission data including the target angle TGVEL from ECM 114 is received.

In step S42, data of the angle REVEL of control shaft 16 detected by angle sensor 127 is transmitted to ECM 114.

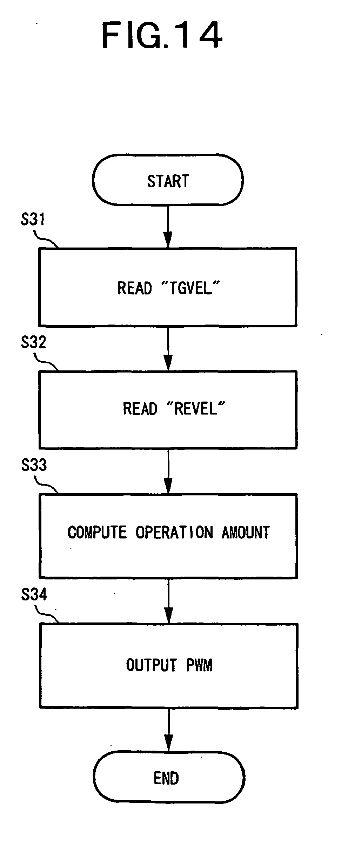

A flowchart in Fig. 14 shows a control of VEL mechanism 112 by VEL controller 113.

In step S31, the data of the target angle TGVEL transmitted from ECM 114 is read.

In step S32, the angle REVEL of control shaft 16 detected by angle sensor 127 is read.

In step S33, the deviation between the target angle TGVEL and the angle REVEL is computed, and a feedback operating amount of DC servo motor 121 is computed based on the deviation.

In step S34, the pulse width modulated signal PWM for driving DC servo motor 121 is output based on the feedback operating amount computed in step S33.

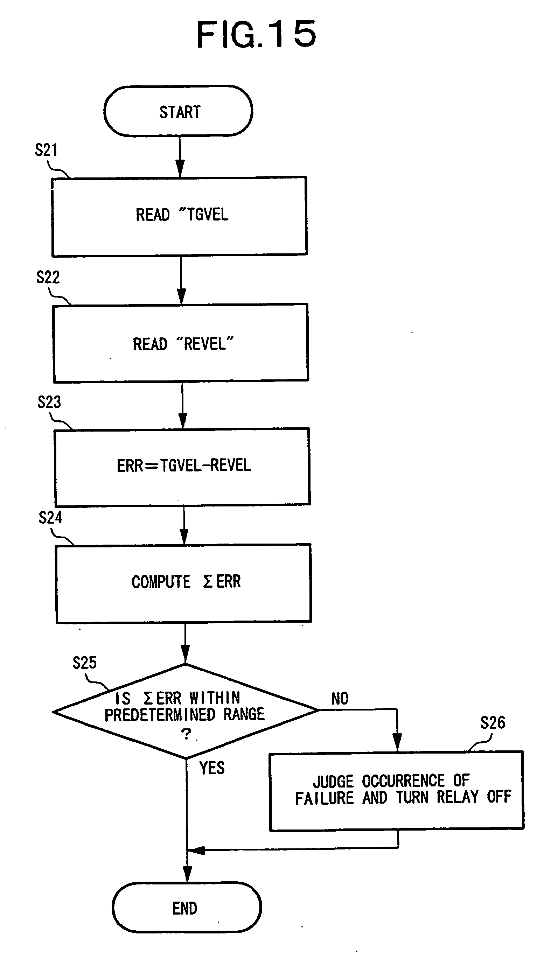

A flowchart in Fig. 15 shows the failure diagnosis of VEL controller 113 and the fail-safe processing by ECM 114.

In the flowchart of Fig. 15, in step S21, the target angle TGVEL is read.

In step S22, the angle REVEL transmitted from VEL controller 113 is read.

In step S23, the deviation ERR between the target angle TGVEL and the angle REVEL is computed.

$$ERR = TGVEL - REVEL$$

In step S24, an integral value $\Sigma ERR$ of the deviation ERR is computed.

In step S25, it is judged whether or not the integral value $\Sigma ERR$ is within a predetermined range.

Then, when the integral value $\Sigma ERR$ is outside the predetermined range, control proceeds to step S26.

In step S26, it is judged that VEL controller 113 is failed.

Further, in step S26, relay drive circuit 114c is controlled to turn relay circuit 306 OFF. As a result, the power supply to motor drive circuit 305 is forcibly shut off, so that the driving of DC servo motor 121 is stopped.

According to the present embodiment, the failure of feedback control function in VEL controller 113 is diagnosed by ECM 114.

Further, when the feedback control function in VEL controller 113 is failed, since the driving of DC servo motor 121 is forcibly stopped by ECM 114, it is possible to avoid that VEL mechanism 112 is erroneously controlled by VEL controller 113.

Moreover, ECM 114 that diagnoses whether or not VEL controller 113 is failed, has functions of controlling a fuel injection quantity of engine 101 and the ignition timing, and also of computing the target angle TGVEL, and accordingly, is not disposed dedicatedly for the failure diagnosis. Therefore, an increase of system cost can be avoided.

Note, it is possible to compute target controlled variable of the variable valve apparatus and also to perform the failure diagnosis, in a control unit that controls an automatic transmission combined with engine 101, in place of ECM 114.

While only selected embodiments have been chosen to illustrate the present invention, it will be apparent to those skilled in the art from this disclosure that various changes and modifications can be made herein without departing from the scope of the invention as defined in the appended claims.

Furthermore, the foregoing description of the embodiments according to the present invention is provided for illustration only, and not for the purpose of limiting the invention as defined in the appended claims.

## Claims

1. A control apparatus for a variable valve apparatus (112) which continuously varies a lift amount and an operating angle of an engine valve (105) of an internal combustion engine (101) due to varying an angle of a control shaft (16) by means of a motor (121), the control apparatus comprising: an angle sensor (127) configured to detect the angle of the control shaft (16); a first control unit (113) including a drive circuit (305) for driving the motor (121), and a CPU (302) capable of receiving a signal from the angle sensor (127) and another signal indicating a target angle of the control shaft (16) and of outputting a control signal to the drive circuit (305); **characterised by** a power supply controlling circuit (301) capable of controlling the supply of power from a power supply to the drive circuit (305); and a second control unit (114) capable of computing the target angle of the control shaft (16) to output the target angle after being computed to the CPU (302), and of receiving the signal detected by and outputted from the angle sensor to thereby diagnose, from the target angle and the signal from the angle sensor (127), whether or not the first control unit (113) is failed, the second control unit (114) controlling the power supply controlling circuit (301) to shut off of the power supply to the drive circuit (305) when it is determined, by diagnosing, that the first control unit (113) is failed.

2. A control apparatus for a variable valve apparatus according to claim 1, wherein said second control unit (114) comprises a control unit that controls a fuel injection quantity of said internal combustion engine (101).

3. A control apparatus for a variable valve apparatus according to claim 1, further comprising an automatic transmission arranged to be combined with the internal combustion engine (101), wherein the second control unit (114) comprises a control unit that controls the automatic transmission.

4. A control apparatus for a variable valve apparatus according to claim 1, wherein said second control unit (114) integrates a deviation between the target angle and the angle of the control shaft detected on the basis of the signal from the angle sensor, and diagnoses that the first control unit is failed, when the integral value of the deviation is outside a predetermined range.

5. A control apparatus for a variable valve apparatus according to claim 1, wherein the first control unit (113) is configured to transmit the signal from the angle sensor to the second control unit (114).

6. A control apparatus for a variable valve apparatus according to claim 1, wherein the engine valve (105) comprises an intake valve.

7. A control apparatus for a variable valve apparatus according to claim 1, wherein the first control unit (113) is configured to perform a pulse width modulated controlling (PWM controlling) of the drive circuit for the motor.

**Patentansprüche**

1. Steuervorrichtung für eine variable Ventilvorrichtung (112), die kontinuierlich einen Hubgrad und einen Betriebswinkel eines Motorventils (105) eines Verbrennungsmotors (101) infolge eines Variierens eines Winkels einer Steuerwelle (16) mittels eines Motors (121) variiert, wobei die Steuervorrichtung umfasst: einen Winkelsensor (127) zum Erfassen des Winkels der Steuerwelle (16); eine erste Steuereinheit (113), beinhaltend eine Antriebsschaltung (305) zum Antreiben des Motors (121) und eine CPU (302) zum Empfangen eines Signals von dem Winkelsensor (127) und eines weiteren Signals, das einen Sollwinkel der Steuerwelle (16) angibt, und zum Ausgeben eines Steuersignals an die Antriebsschaltung (305), **gekennzeichnet durch** eine Leistungsversorgungssteuerschaltung (301) zum Steuern der Versorgung mit Leistung aus einer Leistungsversorgung für die Antriebsschaltung (305); und eine zweite Steuereinheit (114) zum Berechnen des Sollwinkels der Steuerwelle (16) zum Ausgeben des Sollwinkels nach der Berechnung an die CPU (302) und zum Empfangen des **durch** den Winkelsensor erfassten und von diesem ausgegebenen Signals, um hierdurch aus dem Sollwinkel und dem Signal aus dem Winkelsensor (127) zu diagnostizieren, ob die erste Steuereinheit (113) ausgefallen ist, wobei die zweite Steuereinheit (114) die Leistungsversorgungssteuerschaltung (301) im Sinne eines Sperrens der Leistungsversorgung für die Antriebsschaltung (305) steuert, wenn **durch** Diagnostizieren bestimmt wird, dass die erste Steuereinheit (113) ausgefallen ist.

2. Steuervorrichtung für eine variable Ventileinrichtung nach Anspruch 1, wobei die zweite Steuereinheit (114) eine Steuereinheit umfasst, die eine Kraftstoffeinspritzmenge des Verbrennungsmotors (101) steuert.

3. Steuervorrichtung für eine variable Ventilvorrichtung nach Anspruch 1, des Weiteren umfassend ein Automatikgetriebe, das dafür angeordnet ist, mit dem Verbrennungsmotor (101) kombiniert zu werden, wobei die zweite Steuereinheit (114) eine Steuereinheit umfasst, die das Automatikgetriebe steuert.

4. Steuervorrichtung für eine variable Ventilvorrichtung nach Anspruch 1, wobei die zweite Steuereinheit (114) eine Abweichung zwischen dem Sollwinkel und dem Winkel der Steuerwelle, der auf Grundlage des Signals von dem Winkelsensor erfasst wird, integriert und diagnostiziert, dass die erste Steuereinheit ausgefallen ist, wenn der Integralwert der Abweichung außerhalb eines vorbestimmten Bereiches ist.

5. Steuervorrichtung für eine variable Ventilvorrichtung nach Anspruch 1, wobei die erste Steuereinheit (113) zum Übertragen des Signals von dem Winkelsensor an die zweite Steuereinheit (114) ausgestaltet ist.

6. Steuervorrichtung für eine variable Ventilvorrichtung nach Anspruch 1, wobei das Motorventil (105) ein Einlassventil umfasst.

7. Steuervorrichtung für eine variable Ventilvorrichtung nach Anspruch 1, wobei die erste Steuereinheit (113) zum Durchführen einer pulsbreitenmodulierten Steuerung (PWM-Steuerung) der Antriebsschaltung für den Motor ausgestaltet ist.

**Revendications**

1. Dispositif de contrôle pour un dispositif à soupape variable (112) qui modifie en continu une quantité de levée et un angle de commande d'une soupape de moteur (105) d'un moteur à combustion interne (101) en raison d'une variation d'un angle d'un arbre de commande (16) au moyen d'un moteur électrique (121), le dispositif de contrôle comprenant: un capteur d'angle (127) configuré pour détecter l'angle de l'arbre de commande (16); une première unité de commande (113) comprenant un circuit d'entraînement (305) pour entraîner le moteur électrique (121) et une CPU (302) pouvant recevoir un signal du capteur d'angle (127) et un autre signal indiquant un angle cible de l'arbre de commande (16) et transmettre un signal de commande au circuit d'entraînement (305); **caractérisé par** un circuit de commande d'alimentation de courant (301) pouvant commander l'alimentation de courant d'une alimentation de courant au circuit d'entraînement (305); et une seconde unité de commande (114) pouvant calculer l'angle cible de l'arbre de commande (16) pour transmettre l'angle cible après avoir été calculé, à la CPU (302), et recevoir le signal détecté par et transmis à partir du capteur d'angle pour diagnostiquer ainsi, à partir de l'angle cible et du signal provenant du capteur d'angle (127), si la première unité de commande (113) est en panne ou pas, la seconde unité de commande (114) commandant le circuit de commande d'alimentation de courant (301) pour arrêter l'alimentation de courant arrivant au circuit d'entraînement (305), lorsque l'on détermine par diagnostic, que la première unité de commande (113) est en panne.

2. Dispositif de contrôle pour un dispositif à soupape variable selon la revendication 1, dans lequel ladite seconde unité de commande (114) comprend une unité de commande qui commande une quantité d'injection de carburant dudit moteur à combustion interne (101).

3. Dispositif de contrôle pour un dispositif à soupape variable selon la revendication 1, comprenant en outre une transmission automatique agencée pour être combinée avec le moteur à combustion interne (101), dans lequel la seconde unité de commande (114) comprend une unité de commande qui commande la transmission automatique.

4. Dispositif de contrôle pour un dispositif à soupape variable selon la revendication 1, dans lequel ladite seconde unité de commande (114) intègre une déviation entre l'angle cible et l'angle de l'arbre de commande, détectée en fonction du signal du capteur d'angle, et diagnostique que la première unité de commande est en panne, lorsque la valeur intégrale de la déviation est hors d'une plage prédéterminée.

5. Dispositif de contrôle pour un dispositif à soupape variable selon la revendication 1, dans lequel la première unité de commande (113) est configurée pour transmettre le signal du capteur d'angle à la seconde unité de commande (114).

6. Dispositif de contrôle pour un dispositif à soupape variable selon la revendication 1, dans lequel la soupape de moteur (105) comprend une soupape d'admission.

7. Dispositif de contrôle pour un dispositif à soupape variable selon la revendication 1, dans lequel la première unité de commande (113) est configurée pour réaliser un contrôle de modulation d'impulsions en durée (contrôle PWM) du circuit d'entraînement pour le moteur électrique.

# FIG.1

EP 1 561 912 B1

# FIG.2

# FIG.3

EP 1 561 912 B1

# FIG.4

EP 1 561 912 B1

# FIG.5

FIG.6

(A)

(B)

# FIG.7

(A)                    (B)

EP 1 561 912 B1

# FIG.8

# FIG.9

# FIG.10

LIFT AMOUNT

LARGE

SMALL

128

16

123a

123b

121

122

126

124

125

127

SMALL ←→ LARGE

LIFT AMOUNT

113

VEL CONTROLLER

EP 1 561 912 B1

# FIG.11

EP 1 561 912 B1

# FIG.12

START

S11

READ DATA

S12

COMPUTE TARGET ENGINE TORQUE

S13

COMPUTE "TGVEL & TGTVO"

S14

TRANSMIT "TGVEL"

END

# FIG.13

```
            ┌──────────────┐
            │    START      │
            └──────┬───────┘
                   │
      S41          ▼
    ┌─────────────────────────────┐
    │     RECEIVE "TGVEL"          │
    └──────────────┬──────────────┘
                   │
      S42          ▼
    ┌─────────────────────────────┐
    │     TRANSMIT "REVEL"         │
    └──────────────┬──────────────┘
                   │
                   ▼
            ┌──────────────┐
            │     END       │
            └──────────────┘
```

# FIG.14

START

S31

READ "TGVEL"

S32

READ "REVEL"

S33

COMPUTE OPERATION AMOUNT

S34

OUTPUT PWM

END

# FIG.15

```
        ┌─────────────┐
        │    START    │
        └──────┬──────┘
               │
S21            ▼
    ┌─────────────────────┐
    │    READ "TGVEL      │
    └──────────┬──────────┘
               │
S22            ▼
    ┌─────────────────────┐
    │    READ "REVEL"     │
    └──────────┬──────────┘
               │
S23            ▼
    ┌─────────────────────┐
    │  ERR=TGVEL-REVEL    │
    └──────────┬──────────┘
               │
S24            ▼
    ┌─────────────────────┐
    │   COMPUTE Σ ERR     │
    └──────────┬──────────┘
               │
S25            ▼
         ╱──────────╲
        ╱ IS Σ ERR    ╲      NO
       ╱ WITHIN         ╲─────────────┐
       ╲ PREDETERMINED  ╱             │
        ╲ RANGE ?      ╱              │          S26
         ╲──────────╱                 ▼
             │ YES          ┌─────────────────────┐
             │              │  JUDGE OCCURRENCE OF │
             │              │ FAILURE AND TURN     │
             │              │ RELAY OFF            │
             │              └──────────┬──────────┘
             │                         │
             │◄────────────────────────┘
             ▼
        ┌─────────────┐
        │     END     │
        └─────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1279816 A
- JP 2001254637 A
- US 2002059908 A1